# EUROPÄISCHE PATENTSCHRIFT

(11) **EP 1 511 556 B1**
(45) Veröffentlichungstag und Bekanntmachung des Hinweises auf die Patenterteilung: **23.08.2006**
(21) Anmeldenummer: 03759955.2
(22) Anmeldetag: 13.06.2003
(51) Int. Cl.: B01D 53/94, F01N 3/08

(54) **KATALYSATORSYSTEM**
CATALYTIC CONVERTER SYSTEM
SYSTEME CATALYSEUR

(30) Priorität: 13.06.2002 DE 10226206
(43) Veröffentlichungstag der Anmeldung: 09.03.2005
(73) Patentinhaber: Volkswagen AG, 38436 Wolfsburg (DE); Umicore AG & Co. KG, 63457 Hanau-Wolfgang (DE)
(72) Erfinder: EKKEHARD, Pott, 38518 Gifhorn (DE); KREBS, Rudolf, 86697 Obernhausen (DE); ZILLMER, Michael, 38173 Sickte (DE); GÖBEL, Ulrich, 65795 Hattersheim (DE)
(74) Vertreter: Pohlmann, Bernd Michael
(86) Internationale Anmeldenummer: PCT/EP2003/006259
(87) Internationale Veröffentlichungsnummer: WO 2003/106000

(56) Entgegenhaltungen:
- EP-A- 1 052 382
- DE-A- 19 921 971
- US-A1- 2002 048 542

## Beschreibung

Die Erfindung betrifft ein Katalysatorsystem für einen Verbrennungsmotor gemäß dem Oberbegriff der unabhängigen Patentansprüche.

Immer häufiger werden gegenwärtig zur wirksamen Senkung des Kraftstoffverbrauchs von Automobilen magerlauffähige Verbrennungsmotoren konzipiert und eingesetzt, während in der Vergangenheit meist bei einem stöchiometrischen Luftverhältnis arbeitende Otto-Motoren verwendet wurden. Dem unübersehbaren Vorteil eines geringeren Kraftstoffverbrauchs bei diesen sogenannten Magerkonzepten stehen jedoch die aufgrund des Sauerstoffüberschusses bei einem mageren Abgas auftretenden höheren Stickoxid-(NOx) -Emissionen gegenüber, die mit den konventionellen Abgasreinigungsmaßnahmen, wie beispielsweise einem Dreiwegekatalysator, nicht in akzeptablem Ausmaß reduziert werden können. Dieser Nachteil macht sich insbesondere durch erhöhte Fahrzeugkosten bemerkbar, die aus den erhöhten Anforderungen an das Abgasreinigungssystem resultieren um den heutigen und zukünftigen Emissionsvorschriften entsprechend zu können.

Zur Abgasreinigung sind für Otto-Motoren Katalysatorsysteme mit Kombinationen aus motornahen Vorkatalysatoren und stromab dieser angeordneten Hauptkatalysatoren bekannt. Die Hauptkatalysatoren sind üblicherweise als NOx-Speicherkatalysatoren ausgebildet. Ein NOx-Speicherkatalysator besitzt dabei gegenüber einem konventionellen Dreiwegekatalysator die zusätzliche Fähigkeit, Stickoxide eines mageren Abgases zu speichem. Demgegenüber besteht die Funktion des Vorkatalysators darin, die in Warmlaufphasen auftretenden Emissionen von Schadstoffen zu konvertieren und darüber hinaus einen großen Anteil der Schadstoffkonvertierung bei einem Betrieb mit stöchiometrischem Gemisch zu sichern. Entsprechend dieser Arbeitsteilung ist bei kleinvolumigen Motoren ein Trend hin zu kleindimensionierten Vorkatalysatoren mit einem Volumen von < 0,6 dm³ und mit ebenfalls kleinvolumigen Speicherkatalysatoren mit einem Volumen von < 1,9 dm³ zu beobachten. Andererseits werden bei großvolumigen Motoren mit großvolumigen Vorkatalysatoren von beispielsweise > 0,7 dm³ auch großvolumige Speicherkatalysatoren eingesetzt. Der bisherige Optimierungstrend bei diesen Systemen, bei größeren Hauptkatalysatoren auch größere Vorkatalysatoren einzusetzen, wird auch deutlich, wenn man die Katalysatordimensionierung hubraumspezifisch betrachtet, wobei das Katalysatorvolumen auf das Motorvolumen (VH) bezogen wird.

Unabhängig von der Dimensionierung des Vorkatalysators ist bisher ein maximales Katalysatorvolumen von 1,2 dm³ - Kat/dm³VH eingesetzt worden, wie eine Auswertung europäischer und japanischer Fahrzeuge mit direkteinspritzenden schichtladefähigen Otto-Motoren ergab, die in dem neuen europäischen Fahrzyklus (NEFZ) mit thermisch ungeschädigtem Katalysatorsystem einen zeitlichen Schichtbetriebsanteil von zumindest 250 sek., vorzugsweise zumindest 350 sek., und eine Kohlenstoffwasserstoffemission von < 0,07 g/km sowie eine Stickoxidemission von < als 0,05 g/km erreichen. Hierbei besteht das Katalysatorsystem aus zumindest einem motomahen Vorkatalysator und zumindest einem stromab von diesem angeordneten NOx-Speicherkatalysator, der eine Schwefelmasse von weniger als 0,2 g pro Liter Katalysatorvolumen gespeichert hat. Mit der gleichzeitigen Vergrößerung von Vor- und Hauptkatalysatorvolumen wird jedoch bei einer durch die Anhebung des Hauptkatalysatorvolumens verbesserten NOx-Einlagerung das light-off-Verhalten des Hauptkatalysators verschlechtert, da eine größere thermische Masse des stromauf des Speicherkatalysators angeordneten Vorkatalysators aufgeheizt werden muss. Daneben führt im allgemeinen ein Vorkatalysator mit einem größeren Volumen zu einer Kostensteigerung.

Aus der DE 198 26 284 A1 ist bereits ein Katalysatorsystem bekannt, mit einem ersten und einem zweiten Katalysatorträger, jeweils in Strömungsrichtung des Abgases gesehen. Der erste Katalysatorträger weist dabei ein kleineres Volumen als der zweite bzw. ggfls. jeder folgende Katalysatorträger auf. Hiermit wird die Anspringphase nach einem Kaltstart des Motors verkürzt. Beispielsweise beträgt das Volumen der ersten Scheibe 5% bis 50 % des Volumens der Folgescheiben, wobei ein Wert von 25% bevorzugt wird.

Aus der DE 196 36 041 A1 ist für eine selbstzündende Brennkraftmaschine eine Abgasanlage mit einem NOx-Speicher bekannt. Zwischen dem NOx-Speicher und einem Abgasauslass der Brennkraftmaschine ist ein Konverter angeordnet, der ein Gesamtvolumen im Bereich von 10% bis 25 % des Hubraums der Brennkraftmaschine hat. Ferner ist der Konverter mit mindestens 60 g/ft³ platinbelegt. Der Konverter ist motornah angeordnet und vergrößert ein in den Abgasen vorliegendes NO₂/NO-Verhältnis. Hiermit lässt sich bei höheren Abgastemperaturen die Speicherkapazität des nachgeschalteten NOx-Speichers erhöhen, da eine Blockierung der NO2-Absorbtion bei verhältnismäßig hohen Raumgeschwindigkeiten durch absorbiertes NO vermieden wird. Hierbei verbessert die relativ hohe Beladung des Konverters mit Platin die Niedrigtemperaturkonversion. Der Absorptionsspeicher hat hingegen eine niedrigere Platinbelegung von weniger als 50 g/ft³.

Aus der DE 196 40 161 A1 ist ferner ein Abgassystem für magerlauffähige Motoren mit einem Vorkatalysator und einem NOx-Speicher bekannt, bei dem das Volumen des Vorkatalysators 10% bis 20% des Motorhubraums beträgt. Der Speicherkatalysator ist als Dreizonenkatalysator ausgebildet, dessen erste Zone keine Edelmetallbeschichtung oder eine niedrige Edelmetallbeschichtung von bis zu 20 g/ft³ aufweisen kann. Die zweite Zone kann ebenfalls keine Edelmetallbeschichtung und die dritte eine Edelmetallbeschichtung von weniger als 45 g/ft³ aufweisen.

Zur Einsparung von Edelmetall und zur Verringerung des Katalysator-Bauvolumens ist aus der DE 199 18 876 A1 bereits ein katalytischer Konverter für eine Abgasanlage einer Verbrennungskraftmaschine bekannt, der ein erstes und zweites mit einem katalytisch wirksamen Edelmetall beschichtetes Substrat aufweist. In Strömungsrichtung des Abgases gesehen nach dem zweiten Substrat ist ein mit einem katalytisch wirksamen Edelmetall beschichtetes drittes Substrat angeordnet, wobei das zweite Substrat mit einer geringeren Menge katalytisch wirksamen

Edelmetall beschichtet ist als das erste oder das dritte Substrat. Das Verhältnis zwischen Motorhubraum und Konvertervolumen liegt hier bei 1,09 : 1 und 1 : 1,05. Die erste und dritte Schicht weist einen relativ geringen Edelmetallgehalt von 1,77 bis 5,3 g/dm³ auf, während das mittlere Substrat nur einen Gehalt von 0,035 g/ dm³ bis 0,35 g/ dm³ aufweist. Ferner ist aus diesem Dokument ein Vergleichskonverter herkömmlicher Bauart mit einem Volumen von 2,376 dm³ und einem Edelmetallanteil mit katalytisch wirksamer Schicht des Substrateinsatzes von 2,47 g/dm³ bekannt.

Aus der DE 195 28 257 ist ein Abgasreinigungskatalysatorkomplex bekannt mit einem Edelmetallkatalysator aus Platin-Rhodium und Platin-Palladium-Rhodium. Dabei sind ein vorderer und ein hinterer Katalysator in den Abgasweg eines Automotors eingebaut. Das Volumen des vorderen Katalysators beträgt 1,3 I, das des hinteren 1 I. Zur Erhöhung der Beständigkeit gegenüber einer Phosphorvergiftung weist der vordere Katalysator dabei eine Platingehalt von 1,6 g/l auf.

Aus der DE 196 17 124 A1 sind zudem Katalysatoren zur Kontrolle des Emissionsniveaus von Stickoxiden, Kohlenwasserstoffen und Kohlenmonoxiden bekannt mit einem Platin-Rhodiumgehalt von 1,6 g/l und einem Palladiumgehalt von 6,9 g/l.

Ferner sind aus der DE 197 42 705 A1 Katalysatoren mit einem Edelmetallgehalt zwischen 2 und 6 g/l bekannt. Bei diesen Katalysatoren verschlechtert sich das NOx-Reinigungsverhältnis des Katalysators, insbesondere nach einer thermischen Alterung bei einem Gehalt von < 1,0 g/l Platin. Dagegen wird bei einer Platinbeladung von mehr als 6,0 g/l das Platin gesintert.

Bei einem Katalysator für die Reinigung der Abgase eines Dieselmotors ist aus der DE 198 54 794 A1 bekannt, eine direkt auf einem Tragekörper liegende Schicht mit einer Speicherfunktion und eine zweite direkt mit dem Abgas in Kontakt stehende Schicht, mit einer katalytischen Funktion vorzusehen. Hierbei weist die zweite Funktionsschicht zusätzlich eine Kohlenwasserstoffspeicherfunktion auf. Dieser Katalysator weist einen Edelmetallgehalt von 3,18 g/l auf. Ein Katalysator für die Reinigung der Abgase von Brennkraftmaschinen mit verbessertem Kaltstartverhalten und verbesserter Magerdauerstandfestigkeit bei abgesenkter spezifischer Edelmetallbeladung mit einem Edelmetallgehalt von 1,77 g/l bzw. 0,88 g/l Trägervolumen des Katalysators ist aus der DE 40 03 939 A1 bekannt.

Ein Katalysator zur Reinigung von mageren Abgasen mit einer verbesserten NOx-Reinigungswirkung ist ferner aus der EP 0 664 147 A2 bekannt mit einer Platinbeladung von 2,0 g/l.

Die bekannten bisherigen Verfahren basieren auf Optimierungsstrategien, bei denen ein bestimmtes Volumenverhältnis zwischen Vorkatalysator und Motorhubraum, ein bestimmtes Volumenverhältnis zwischen Vorkatalysator und Hauptkatalysator gewählt oder bei denen ein strukturierter Katalysatoraufbau mit jeweils spezifischen Edelmetallbelegungen eingesetzt wird.

Trotz des zum Teil mit dem aus der Stand der Technik bekannten Katalysatorsystemen erreichten Vorteilen, ist die Abgasreinigung, insbesondere von magerlauffähigen Motoren aufwändig und beinhaltet Probleme, die sich aus einem relativ hohen Edelmetallgehalt, einer komplizierten Steuerung bzw. Regelung von Speicher- und Regenerationsvorgängen des Katalysatorsystems, einem ungünstigen Warmlaufverhalten und/oder ungünstigen Kraftstoffverbrauch ergeben.

Aufgabe der vorliegenden Erfindung ist daher die Schaffung eines Katalysatorsystems, mit dem auf eine einfache Weise kostengünstig eine effektive Emisslonsverminderung erreicht werden kann.

Diese Aufgabe wird erfindungsgemäß mit dem Katalysatorsystem gelöst, wie es durch die Merkmale der unabhängigen Patentansprüche charakterisiert ist.

Bei dem erfindungsgemäßen Verfahren zur Auslegung eines direkteinspritzenden magerlauffähigen Verbrennungsmotors mit einem Katalysatorsystem mit einer motomahen Vorkatalysatoreinrichtung und einem stromab der Vorkatalysatoreinrichtung angeordneten NOₓ-Speicherkatalysator, wobei die Vorkatalysatoreinrichtung ein spezifisches Volumen kleiner als 0,38 dm³ und der NOₓ-Speicherkatalysator ein spezifisches Volumen größer als 1,3 dm³, jeweils bezogen auf den Hubraum des Verbrennungsmotors in dm³ aufweist, ist vorgesehen, dass der NOₓ-Speicherkatalysator einen spezifischen Edelmetallgehalt von höchstens 4,7 g/dm³ aufweist und der Verbrennungsmotor im neuen europäischen Fahrzyklus eine Kohlenwasserstoffemission von < 0,07 g/km und eine NOx-Emission von < 0,05 g/km erreicht.

Erfindungsgemäß weist das Katalysatorsystem mit einer motornahen Vorkatalysatorrichtung und einem stromab der Vorkatalysatoreinrichtung angeordneten NOx-Speicherkatalysator eine Vorkatalysatoreinrichtung auf, mit einem Volumen < 0,75 dm³ und einem NOx-Speicherkatalysator mit einem Volumen > 1,9 dm³. Die Vorkatalysatoreinrichtung mit einem relativ kleinen Volumen verbessert das light-off-Verhalten des Gesamtsystems, in der nicht nur die Vorkatalysatoreinrichtung selbst schneller aufgeheizt werden kann, sondern darüber hinaus weniger thermisch träge Masse stromauf des NOx-Speicherkatalysators einer Aufheizung des NOx-Speicherkatalysators entgegen steht. Andererseits ermöglicht der gegenüber dem Stand der Technik volumenmässig vergrößert angelegte NOx-Speicherkatalysator eine verbesserte NOx-Einlagerung. Jedoch ist das relative Verhältnis des Volumens vor Vorkatalysatoreinrichtung und NOx-Speicherkatalysator derart gewählt, dass die Schadstoffkonvertierung für ein stöchiometrisches Abgas trotz des relativ geringen Volumens der Vorkatalysatoreinrichtung selbst in einer Warmlaufphase nicht in unzulässiger Weise reduziert ist. Da die NOx-Speicherfähigkeit des relativ großen Speicherkatalysators verbessert ist, wird eine höhere NOx-Aufnahme vor der Regeneration des NOx-Speicherkatalysators erreicht, so dass insgesamt eine geringere Häufigkeit von Regenerationsphasen und damit eine entsprechende Verbrauchsminderung erzielt werden kann.

Da mit einem höheren Volumen des NOx-Speicherkatalysators dieser auch eine höhere thermische Trägheit aufweist, erhöht sich die Wahrscheinlichkeit, dass unter Bedingungen eines Realverkehrs zumindest ein Teilstück dieses Katalysators in einem Arbeitstemperaturfenster zwischen 250 °C und 500 °C liegt und damit weder zu heiß noch zu kalt ist um eine wirksame Reinigung eines mageren Abgases zu gewährleisten. Die erwünschte Folge ist, das der Verbrennungsmotor relativ häufiger mager betrieben werden kann, was zu einer weiteren Verbrauchsminderung an Kraftstoff führt.

Die erwähnten Vorteile weist auch ein Katalysatorsystem auf, bei dem die Vorkatalysatoreinrichtung ein spezifisches Volumen < 0,38 dm³ und der NOx-Speicherkatalysator ein spezifisches Volumen > 1,3 dm³, jeweils bezogen auf den Hubraum des Verbrennungsmotors in dm³ aufweist.

Zweckmäßiger Weise weist der NOx-Speicherkatalysator eine Edelmetallbeladung mit einem oder mehreren Elementen der Platingruppe, insbesondere Platin-Palladium oder -Rhodium auf, da hiermit die katalytische Aktivität zur NOx- sowie Kohlenwasserstoff- und CO-Konvertierung erhöht werden kann.

Besonders bevorzugt ist eine Katalysatorsystem mit einem NOx-Speicherkatalysator mit einem spezifischen Edelmetallgehalt von höchstens 4,7 g/dm³. In Kombination mit der angegebenen Volumendimensionierung von Vorkatalysatoreinrichtung und NOx-Speicherkatalysatoreinrichtung erreicht das Katalysatorsystem mit einem derartigen spezifischen Edelmetallgehalt HC- und NOx-Emissionswerte unterhalb der durch die neueren gesetzlichen Vorschriften gesetzten Grenzwerte. Bevorzugt ist eine Ausführungsform der Erfindung bei der der NOx-Speicherkatalysator eine maximale Edelmetallbeladung von 8,93 g aufweist, bei der auch hiermit die gesetzlichen Grenzwerte unterschritten werden, gleichzeitig aber auch bei einem weiter vergrößerten Volumen des NOx-Speicherkatalysators die durch die Edelmetallbeladung verbundenen Kosten gering gehalten werden können.

Bevorzugt wird das Katalysatorsystem in einem Temperaturarbeitsfenster zwischen 250 °C und 500 °C betrieben und damit der Anteil der Magerbetriebsphasen beim Betrieb des Verbrennungsmotors erhöht.

Das erfindungsgemäße Katalysatorsystem erreicht eine besonders hohe Gesamteffizienz bezogen auf Emissionsverminderung und Kraftstoffverbrauch, wenn die Vorkatalysatoreinrichtung für einen Betrieb mit einen stöchiometrischem Abgas optimiert wird. Zweckmäßiger Weise ist die Vorkatalysatoreinrichtung als Dreiwegekatalysator ausgebildet. Die Vorkatalysatoreinrichtung kann auch mehr als einen Katalysator aufweisen.

Eine besonders hohe Gesamtperformance wird erreicht, wenn der Verbrennungsmotor ein direkt einspritzender schichtladefähiger Ottomotor oder ein Dieselmotor ist, da dann ein geringer Kraftstoffverbrauch mit einem hohen Fahrkomfort und niedrigen Schadstoff-Emissionen erzielt werden kann.

Weitere Aspekte und Vorteile der Erfindung ergeben sich auch unabhängig von ihrer Zusammenfassung in den Patentansprüchen aus der nachfolgend anhand von Zeichnungen erläuterten Beschreibung von Ausführungsbeispielen.

Die Zeichnungen zeigen in
- Figur 1: einen Verbrennungsmotor mit einem Katalysatorsystem,
- Figur 2: eine grafische Darstellung von Vorkatalysator- und Hauptkatalysatordimensionierungen mit absoluten Katalysatorgrößen,
- Figur 3: eine grafische Darstellung von Vorkatalysator- und Hauptkatalysatordimensionierungen bezogen auf den Hubraum des jeweils zugeordneten Verbrennungsmotors.

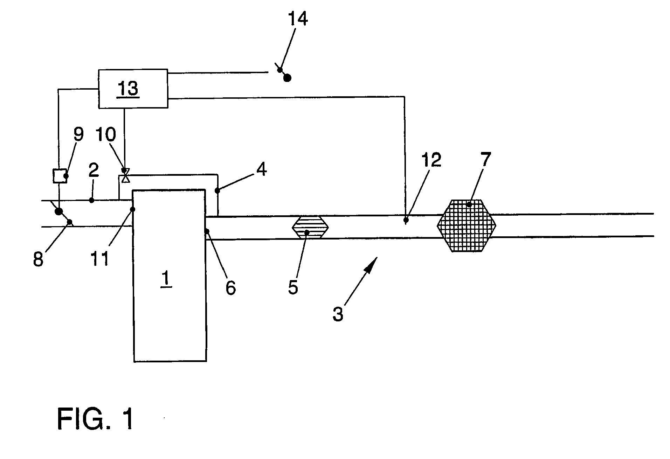

Der in Figur 1 dargestellte Verbrennungsmotor 1 ist vorzugsweise ein direkt einspritzender insbesondere schichtladefähiger Ottomotor oder ein Dieselmotor. Der Verbrennungsmotor 1 hat einen Lufteinlasskanal 2 und eine Abgasanlage 3, von der eine Abgasrückführungsleitung 4 zu dem Lufteinlasskanal 2 führt. Mittels der Abgasrückführungsleitung 4 kann die NOx-Rohemission reduziert werden. Motornah ist in der Abgasanlage 3 eine Vorkatalysatoreinrichtung 5 angeordnet. Die Entnahme des rückgeführten Abgases kann abweichend von Fig. 1 auch hinter einer Vorkatalysatoreinrichtung 5 erfolgen. Stromab der Vorkatalysatoreinrichtung 5 ist ein NOx-Speicherkatalysator 7 angeordnet. Im Lufteinlasskanal 2 ist stromauf der Einmündung der Abgasrückführungsleitung 4 eine Drosselklappe 8 angeordnet, die beispielsweise mittels eines Stellmotors 9 zu öffnen und schließen ist. Zur Kontrolle der von der Abgasanlage 3 zu dem Lufteinlass 11 zurückgeführten Abgasmenge ist ein Stellventil 10 in der Abgasrückführungsleitung 4 angeordnet.

Eine Lambdasonde 12 ist stromaufwärts des NOx-Speicherkatalysators 7 in der Abgasanlage angeordnet mit der der Sauerstoffgehalt des Abgases ermittelt werden kann. Die Signale der Lambdasonde 12 werden einer Steuerung 13 zugeführt, die wiederum den Stellmotor 9 der Lufteinlassdrossel 8 und des Stellventil 10 ansteuert. Ferner erhält die Steuerung 13 weitere motorrelevante Werte, wie bspw. die Drehzahl N des Motors und sowie den Lastwert, bspw. von einem Gaspedal 14.

Der Verbrennungsmotor 1 wird in an sich bekannter Weise derart betrieben, dass das aus dem Vorkatalysator 5 und dem NOx-Speicherkatalysator 7 bestehende Katalysatorsystem eine den vorgeschriebenen Abgasgrenzwerten entsprechende Gesamtemission an Schadstoffen, insbesondere Kohlenwasserstoffen (HC), Kohlenmonoxid (CO) und Stickoxid (NOx) nicht überschreitet. Besonders bevorzugt ist ein Schichtladebetrieb mit einem mageren Gemisch. In Abhängigkeit von der NOx-Beladung des NOx-Speicherkatalysators 7 und unter Umständen noch weiteren Randbedingungen ist eine Regeneration des NOx-Speicherkatalysators mit einem stöchiometrischen bis fetten Gemisch erforderlich.

Vorzugsweise wird bei dem Betrieb des Verbrennungsmotors 1 ferner eine Temperatur zumindest von Teilen des NOx-Speicherkatalysators 7 in einem Arbeitsfenster zwischen 250 °C und 500 °C gewährleistet. In Abhängigkeit von einer mit an sich bekannten Mitteln diagnostizierbaren Schwefelvergiftung kann der NOx-Speicherkatalysator auch auf höhere Temperaturen zur Durchführung einer Desulfatierung aufgeheizt werden, wenn dies wegen einer durch schwefelhaltigen Kraftstoff verursachten Schwefelvergiftung des NOx-Speicherkatalysators 7 erforderlich sein sollte.

Die Vorkatalysatoreinrichtung 5 ist vorzugsweise zur Reinigung eines stöchiometrischen Abgases optimiert ausgelegt. In einer bevorzugten Ausführungsform ist die Vorkatalysatoreinrichtung 5 als Dreiwegekatalysator, d.h. als geregelter Katalysator ausgebildet um Kohlenwasserstoffe, Kohlenmonoxid und Stickoxid mit einer Abgaszusammensetzung im Bereich um Lambda = 1 zu konvertieren. Bevorzugt besteht diese Vorkatalysatoreinrichtung aus einem wabenförmigen Keramik- oder Metallträger, in dessen Kanälen eine Trägerschicht aus Aluminiumoxid aufgebracht ist, die die Oberfläche stark vergrößert. Das eigentliche Katalysatormaterial, vor allem Edelmetalle wie Platin, Palladium und Rhodium ist sind auf diese Oberfläche aufgebracht.

Der NOx-Speicherkatalysator 7 ist in an sich bekannter Weise aufgebaut und weist einen wabenförmigen Keramikträger mit einer als washcoat ausgebildeten Oberfläche auf. Vorzugsweise enthält die Oberfläche γ-Aluminiumoxid. Als Speichermaterial für Stickoxide werden vorzugsweise basische Materialien wie Alkalimetalloxide oder Erdalkalimetalloxide verwendet.

Ferner enthält der NOx-Speicherkatalysator eine Edelmetallbeladung, vorzugsweise Platin, Palladium und/oder Rhodium. Zur Verbesserung des Speicher- und/oder des katalytischen Verhaltens des NOx-Speicherkatalysators, kann dieser auch noch weitere Merkmale aufweisen, bspw. ein besonders poröses Trägermaterial, unter Umständen Abschnitte, die ein saures Material enthalten und auch mehrere Trägerschichten aufweisen.

Erfindungsgemäß ist das Volumen der Vorkatalysatoreinrichtung 5 < 0,75 dm³ und das des NOx-Speicherkatalysators 7 > 1,9 dm³.

Als Volumen des Katalysators wird hier die einhüllende Kontur des beschichteten Katalysatorträgers ohne umhüllende Halte- oder Verpackungsvorrichtungen bezeichnet. Beispielsweise ist daher bei einem zylinderförmigen Katalysator das Volumen π / 4 · d² · I , wobei d der Durchmesser und I die Länge des Katalysatorträgers ist.

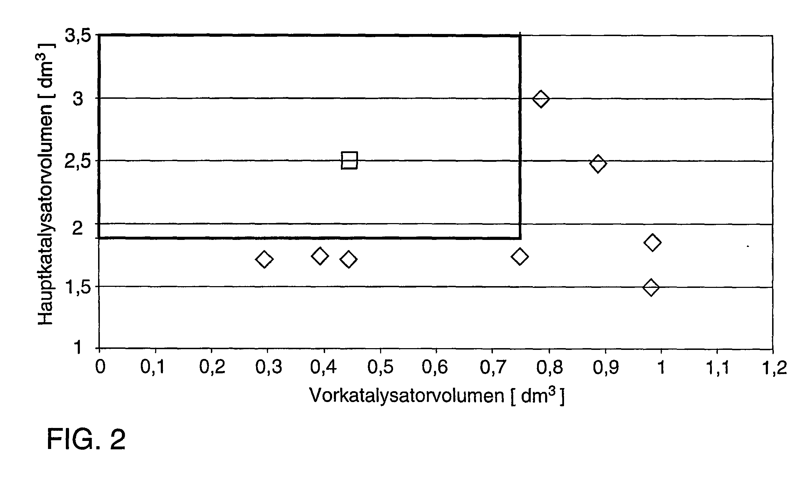

In Figur 2 ist eine grafische Darstellung der absoluten Katalysatorvolumina gezeigt. Hierbei bezeichnen die auf der Spitze stehenden Quadrate die aus dem Stand der Technik bekannten Dimensionierungen, während eine Dimensionierung gemäß der Erfindung mit einem parallel zu dem Achsensystem angeordneten Quadrat eingetragen ist.

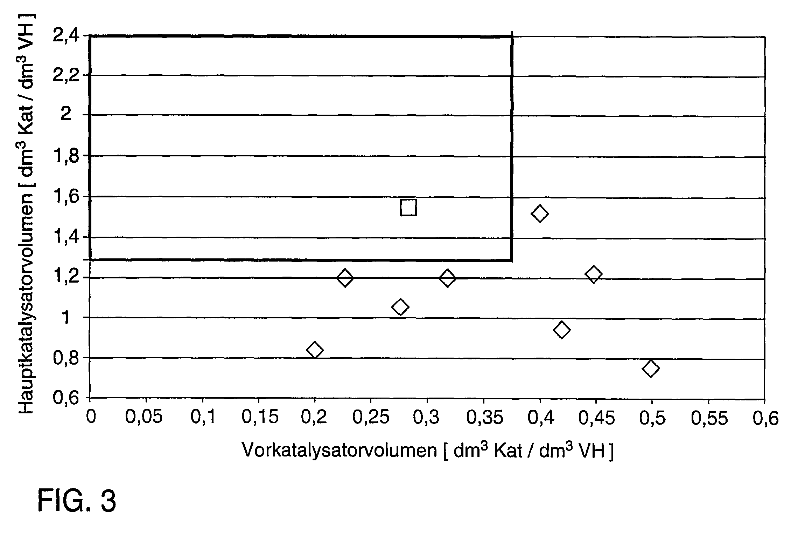

Zur weiteren Veranschaulichung ist in Figur 3 die Dimensionierung der Volumina der Vorkatalysatoreinrichtung 5 und des NOx-Speicherkatalysators 7 bezogen auf den Hubraum des Verbrennungsmotors 1 dargestellt. Hierbei wurde dieselbe Konvention wie bei Figur 2 zur Bezeichnung der aus dem Stand der Technik bekannten Dimensionierung und der erfindungsgemäßen Ausführungsform verwendet.

Bei der erfindungsgemäßen Dimensionierung von Vorkatalysatoreinrichtung und NOx-Speicherkatalysator weist die Vorkatalysatoreinrichtung 5 ein spezifisches Volumen < 0,38 dm³ und der NOx-Speicherkatalysator 7 ein spezifisches Volumen > 1,3 dm³ auf, jeweils bezogen auf den Hubraum des Verbrennungsmotors 1 in dm³.

Der NOx-Speicherkatalysator 7 wird erfindungsgemäß mit maximal 4,7 g Edelmetall /dm³ beladen. Besonders bevorzugt wird eine Beladung des NOx-Speicherkatalysators 7 mit maximal 8,93 g Edelmetall, bei einem Volumen von mehr als 1,9 dm³.

Das aus der Vorkatalysatoreinrichtung 5 und dem NOx-Speicherkatalysator 7 bestehende Katalysatorsystem ist angepasst an einen direkt einspritzenden schichtladefähigen Ottomotor, der im neuen europäischen Fahrzyklus eine Kohlenwasserstoffemission von < 0,07 g/km und eine NOx-Emission von < 0,05 g/km erreicht. Hierbei wird ein zeitlicher Schichtbetriebsanteil von zumindest 250 sek. (vorzugsweise zumindest 350 sek.) bei einer Gesamtdauer des Zyklus von 1180 Sek. erreicht. Die gespeicherte Schwefelmasse ist < 0,2 g/l Katalysatorvolumen.

Das erfindungsgemäße Katalysatorsystem weist eine optimierte Arbeitsteilung zwischen der Vorkatalysatoreinrichtung 5 und der dem NOx-Speicherkatalysator 7 auf. Daher wurde bei einem Fahrzeug mit einem direkteinspritzenden schichtladefähigen Ottomotor mit einem Hubraum von 1,6 dm³ (VH) im NEFZ mit einer Vorkatalysatoreinrichtung von 0,45 dm³ Volumen und mit einem NOx-Speicherkatalysator von 2,47 dm³ Volumen mit einer Edelmetallbeladung von 7,14 g eine Emission von 0,058 g / km Kohlenwasserstoffe und 0,027 g / km NOx gemessen. Zum Vergleich wurden bei einem Katalysatorsystem mit einer Vorkatalysatoreinrichtung von 0,45 dm³ Volumen, einem NOx-Speicherkatalysator von 1,7 dm³ Volumen und 7,65 g Edelmetallbeladung eine Emission von 0,059 g /km Kohlenwasserstoffen und 0,028 g / km NOx ermittelt. In beiden Fällen wurden frische und konditionierte (1 h bei 650 °C und Lambda = 1) Katalysatoren eingesetzt. Trotz des verringerten spezifischen und absoluten Edelmetallgehalts des NOx-Speicherkatalysators gegenüber dem Vergleichssystem, ist bei einer erfindungsgemäßen Vergrößerung des NOx-Speicherkatalysatorvolumens die Konvertierungsleistung des Katalysatorsystems nicht verschlechtert.

## Patentansprüche

1. Verfahren zur Auslegung eines direkteinspritzenden magerlauffähigen Verbrennungsmotors mit einem Katalysatorsystem mit einer motomahen Vorkatalysatoreinrichtung und einem stromab der Vorkatalysatoreinrichtung angeordneten NOₓ-Speicherkatalysator, wobei die Vorkatalysatoreinrichtung ein spezifisches Volumen kleiner als 0,38 dm³ und der NOₓ₋Speicherkatalysator ein spezifisches Volumen größer als 1,3 dm³, jeweils bezogen auf den Hubraum des Verbrennungsmotors in dm³ aufweist, **dadurch gekennzeichnet, dass** der NOₓ-Speicherkatalysator einen spezifischen Edelmetallgehalt von höchstens 4,7 g/dm³ aufweist und der Verbrennungsmotor im neuen europäischen Fahrzyklus eine Kohlenwasserstoffemission von < 0,07 g/km und eine NOx-Emission von < 0,05 g/km erreicht.

2. Verfahren nach Anspruch 1, **dadurch gekennzeichnet, dass** der NOₓ₋Speicherkatalysator eine Edelmetallbeladung mit einem oder mehreren Elementen der Platingruppe, insbesondere Platin, Palladium oder Rhodium aufweist.

3. Verfahren nach Anspruch 1 oder 2, **dadurch gekennzeichnet, dass** zumindest in Teilstücken der NOx-Speicherkatalysator in einem Temperatur-Arbeitsfenster zwischen 250 °C und 500 °C betreibbar ist.

4. Verfahren nach zumindest einem der vorhergehenden Ansprüche, **dadurch gekennzeichnet, dass** die Vorkatalysatoreinrichtung für einen Betrieb mit einem stöchiometrischen Abgas optimiert ist.

5. Verfahren nach Anspruch 4, **dadurch gekennzeichnet, dass** die Vorkatalysatoreinrichtung als Dreiwegekatalysator ausgebildet ist.

6. Verfahren nach zumindest einem der vorhergehenden Ansprüche, **dadurch gekennzeichnet, dass** die Vorkatalysatoreinrichtung mehr als einen Katalysator aufweist.

## Claims

1. Method for designing a direct injection internal combustion engine which is capable of running in lean-burn mode and has a catalytic converter system with a primary catalytic converter device arranged close to the engine and an NOₓ storage catalytic converter arranged downstream of the primary catalytic converter device, the primary catalytic converter device having a specific volume of less than 0.38 dm³ and the NOₓ storage catalytic converter having a specific volume of greater than 1.3 dm³, in each case based on the displacement of the internal combustion engine in dm³, **characterized in that** the NOₓ storage catalytic converter has a specific precious metal content of at most 4.7 g/dm³ and the internal combustion engine, in the new European driving cycle, achieves hydrocarbon emissions of < 0.07 g/km and NOₓ emissions of < 0.05 g/km.

2. Method according to Claim 1, **characterized in that** the NOₓ storage catalytic converter has a precious metal loading with one or more elements from the platinum group, in particular platinum, palladium or rhodium.

3. Method according to Claim 1 or 2, **characterized in that** at least in pieces the NOₓ storage catalytic converter can be operated in a temperature working window of between 250°C and 500°C.

4. Method according to at least one of the preceding claims, **characterized in that** the primary catalytic converter device is optimized for operation with a stoichiometric exhaust gas.

5. Method according to Claim 4, **characterized in that** the primary catalytic converter device is designed as a three-way catalytic converter.

6. Method according to at least one of the preceding claims, **characterized in that** the primary catalytic converter device has more than one catalytic converter.

## Revendications

1. Procédé pour équiper un moteur à combustion interne pouvant fonctionner en mode de mélange pauvre et à injection directe d'un système de catalyseur avec un dispositif de précatalyseur proche du moteur et un dispositif de catalyseur à accumulation de NOx disposé en aval du dispositif de précatalyseur, le dispositif de précatalyseur présentant un volume spécifique inférieur à 0,38 dm³ et le catalyseur à accumulation de NOx présentant un volume spécifique supérieur à 1,3 dm³, à chaque fois par rapport à la cylindrée du moteur à combustion interne en dm³, **caractérisé en ce que** le catalyseur à accumulation de NOx présente une teneur en métaux précieux spécifique d'au plus 4,7 g/dm³, et le moteur à combustion interne atteint dans un nouveau cycle de conduite européen une émission d'hydrocarbures < 0,07 g/km et une émission de NOx < 0,05 g/km.

2. Procédé selon la revendication 1, **caractérisé en ce que** le catalyseur à accumulation de NOx présente une charge en métaux précieux avec un ou plusieurs des éléments du groupe du platine, notamment le platine, le palladium ou le rhodium.

3. Procédé selon la revendication 1 ou 2, **caractérisé en ce que** le catalyseur à accumulation de NOx peut fonctionner au moins dans certaines parties partielles dans une fenêtre de travail de température comprise entre 250°C et 500°C.

4. Procédé selon au moins l'une quelconque des revendications précédentes, **caractérisé en ce que** le dispositif de précatalyseur est optimisé pour un fonctionnement avec un gaz d'échappement stoechiométrique.

5. Procédé selon la revendication 4, **caractérisé en ce que** le dispositif de précatalyseur est réalisé sous la forme d'un catalyseur à trois voies.

6. Procédé selon au moins l'une quelconque des revendications précédentes, **caractérisé en ce que** le dispositif de précatalyseur présente plus d'un catalyseur.
